(19) Europäisches Patentamt
European Patent Office
Office européen des brevets

(11) **EP 4 765 708 A1**

(12) **EUROPEAN PATENT APPLICATION**
published in accordance with Art. 153(4) EPC

(43) Date of publication:
**24.06.2026 Bulletin 2026/26**

(21) Application number: **24861894.4**

(22) Date of filing: **30.08.2024**

(51) International Patent Classification (IPC):
*H04L 5/00* (2006.01)    *H04W 72/02* (2009.01)

(52) Cooperative Patent Classification (CPC):
**H04L 1/1607; H04L 5/00; H04W 52/02;**
**H04W 72/02; H04W 72/1263; H04W 72/232**

(86) International application number:
**PCT/CN2024/115706**

(87) International publication number:
**WO 2025/051050 (13.03.2025 Gazette 2025/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.09.2023 CN 202311160443**

(71) Applicant: **HUAWEI TECHNOLOGIES CO., LTD.**
**Shenzhen 518129 (CN)**

(72) Inventors:
• **HUA, Meng**
  **Shenzhen, Guangdong 518129 (CN)**
• **GAO, Fei**
  **Shenzhen, Guangdong 518129 (CN)**
• **DING, Mengying**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA TRANSMISSION METHOD AND APPARATUS**

(57)    This application discloses a data transmission method and apparatus to reduce power consumption of a terminal device. In the method, if first DCI indicating retransmission of first data is transmitted within a first active time, the first data is carried in a first target cell in a first cell group. If the first DCI is transmitted within a second active time, the first data is carried in a second target cell in a second cell group. The second cell group is included in the first cell group and a quantity of cells in the second cell group is less than a quantity of cells in the first cell group. The first active time is a running time of a DRX-on duration timer or a DRX-inactivity timer. The second active time is an intersection time period of a non-running time of the DRX-on duration timer, a non-running time of the DRX-inactivity timer, and a running time of a retransmission timer of a process of the first data.

FIG. 2

## Description

This application claims priority to Chinese Patent Application No. 202311160443.2, filed with the China National Intellectual Property Administration on September 7, 2023 and entitled "DATA TRANSMISSION METHOD AND APPARATUS", which is incorporated herein by reference in its entirety.

## TECHNICAL FIELD

Embodiments of this application relate to the wireless communication field, and in particular, to a data transmission method and apparatus.

## BACKGROUND

In the wireless communication field, a coverage area of each network device may be divided into one or more cells. A plurality of cells may be configured for a terminal device supporting carrier aggregation (carrier aggregation, CA), and these cells include a scheduling cell carrying control information and a scheduled cell carrying data. The network device performs data transmission with a terminal device by using a cell. If the data transmission fails, the network device may retransmit the data.

In an existing manner, if initial data transmission fails and data retransmission needs to be performed, the terminal device monitors an entire scheduling cell group to continuously monitor a physical downlink control channel (physical downlink control channel, PDCCH) used to carry retransmission scheduling information. In addition, the terminal device further monitors an entire scheduled cell group to determine, based on the retransmission scheduling information, a scheduled carrier used for data retransmission.

In this method, the terminal device continuously monitors all cells in the scheduling cell group and all cells in the scheduled cell group, leading to high power consumption.

## SUMMARY

This application provides a data transmission method and apparatus to reduce power consumption of a terminal device.

A first aspect of this application provides a data transmission method. The method is applied to a terminal device and includes:

The terminal device communicates with a network device. The network device sends downlink control information (downlink control information, DCI) to the terminal device to schedule the terminal device. During data retransmission, the DCI may indicate a cell in which data is retransmitted. In this application, if the terminal device receives first DCI from the network device within a first active time, that is, if the network device sends the first DCI to the terminal device within the first active time, the first DCI indicates to retransmit first data in a first target cell. In this case, the terminal device receives the first data in a first target cell. The first target cell is any cell in a first cell group, the first cell group includes M cells, and M is an integer greater than or equal to 2. Optionally, the first cell group may include all cells that are configured for the terminal device and that can carry downlink data, or the first cell group may include all cells that are configured for the terminal device and that include a downlink carrier, or the first cell group includes all scheduled cells configured for the terminal device. If the terminal device receives the first DCI from the network device within a second active time, the first DCI indicates to retransmit the first data in a second target cell. In this case, the terminal device receives the first data in the second target cell. The second target cell is any cell in a second cell group, the second cell group is included in the first cell group, and a quantity of cells in the second cell group is less than a quantity of cells in the first cell group. In other words, each cell in the second cell group is a cell in the first cell group, and the quantity of cells included in the second cell group is less than M. The first data is downlink data. That the terminal device receives the first data includes that the terminal device demodulates and decodes the first data and so on. The first active time is a running time of a discontinuous reception-on duration timer (drx-on Duration Timer) or a running time of a discontinuous reception-inactivity timer (drx-InactivityTimer). The second active time is an intersection time period of a non-running time of the discontinuous reception-on duration timer, a non-running time of the discontinuous reception-inactivity timer, and a running time of a retransmission timer (drx-RetransmissionTimer) of a process of the first data.

It can be learned from the foregoing technical solution that this application has the following advantage: When receiving, in different active times, the first DCI indicating retransmission of the first data, the terminal device carries the first data in different cells. For downlink data retransmission, if the first DCI is received within the first active time, the first data is received in the first target cell in the first cell group. If the first DCI is received within the second active time, the first data is received in the second target cell in the second cell group. The quantity of cells in the second cell group is less than the quantity of cells in the first cell group, and each cell in the second cell group is a cell in the first cell group. Therefore, the terminal device does not need to receive or store a downlink signal of a cell outside the second cell group in the first cell group within the second active time, thereby reducing power consumption of the terminal device.

In some optional implementations of the first aspect, the first target cell may be a cell that is in the first cell group and that is different from a cell in which the first data is transmitted most recently. In other words, the first data may be retransmitted in a cross-cell retransmission manner.

In this application, the terminal device may receive the first data across cells. In other words, retransmission of the first data is cross-cell retransmission, so that a data transmission delay can be reduced.

A second aspect of this application provides a data transmission method. The method is applied to a terminal device and includes:

During uplink data retransmission, if the terminal device receives first DCI from a network device within a first active time, that is, if the network device sends the first DCI to the terminal device within the first active time, the first DCI indicates to retransmit first data in a first target cell. In this case, the terminal device sends the first data to the network device in the first target cell, and the first target cell is any cell in a first cell group. Optionally, the first cell group may include all cells that are configured for the terminal device and that can carry uplink data, or the first cell group may include all cells that are configured for the terminal device and that include an uplink carrier, or the first cell group includes all scheduled cells configured for the terminal device. If the terminal device receives the first DCI from the network device within a second active time, the first DCI indicates to retransmit the first data in a second target cell. In this case, the terminal device sends the first data to the network device in the second target cell, and the second target cell is any cell in a second cell group. Related descriptions of the first cell group, the second cell group, the first active time, and the second active time are similar to those in the first aspect. Details are not described herein again. The first data is uplink data.

It can be learned from the foregoing technical solution that this application has the following advantage: When receiving, in different active times, the first DCI indicating retransmission of the first data, the terminal device carries the first data in different cells. For uplink data retransmission, if the first DCI is received within the first active time, the first data is sent in the first target cell in the first cell group. If the first DCI is received within the second active time, the first data is sent in the second target cell in the second cell group. A quantity of cells in the second cell group is less than a quantity of cells in the first cell group, and each cell in the second cell group is a cell in the first cell group. Therefore, the terminal device does not need to enable, within the second active time, in advance a radio frequency component corresponding to a cell outside the second cell group in the first cell group to prepare for transmission, thereby reducing the power consumption of the terminal device.

In some optional implementations of the second aspect, the first target cell may be a cell that is in the first cell group and that is different from a cell in which the first data is transmitted most recently. In other words, the first data may be retransmitted in a cross-cell retransmission manner.

In this application, the terminal device may send the first data across cells. In other words, retransmission of the first data is cross-cell retransmission, so that a data transmission delay can be reduced.

A third aspect of this application provides a data transmission method. The method is applied to a network device and includes:

The network device sends first DCI to a terminal device, where the first DCI is used to schedule retransmission of first data. The network device sends the first DCI at different times, and the first DCI indicates different cells used to retransmit the first data. Specifically, if the first DCI is sent within a first active time, the first DCI indicates to retransmit the first data in a first target cell in a first cell group. If the first DCI is sent within a second active time, the first DCI indicates to retransmit the first data in a second target cell in a second cell group. The retransmission of the first data includes uplink retransmission of the first data or downlink retransmission first data. This is not specifically limited herein. The first target cell is any cell in the first cell group, the first cell group includes M cells, and M is an integer greater than or equal to 2. The second target cell is any cell in the second cell group, each cell in the second cell group is a cell in the first cell group, and a quantity of cells included in the second cell group is less than M. Related descriptions of the first active time and the second active time are similar to those in the first aspect. Details are not described herein again.

In this application, content indicated by the first DCI varies with a time at which the first DCI is delivered. If the network device determines to deliver the first DCI within the first active time, the first DCI indicates to retransmit the first data in the first target cell in the first cell group. If the first DCI is delivered within the second active time, the first DCI indicates to retransmit the first data in the second target cell in the second cell group. The quantity of cells in the second cell group is less than a quantity of cells in the first cell group, and each cell in the second cell group is a cell in the first cell group. Therefore, when the first data is downlink data, the terminal device does not need to receive or store a downlink signal of a cell outside the second cell group in the first cell group within the second active time, thereby reducing power consumption of the terminal device. When the first data is uplink data, the terminal device does not need to enable, within the second active time, in advance a radio frequency component corresponding to a cell outside the second cell group in the first cell group to prepare for transmission, thereby reducing the power consumption of the terminal device.

In some optional implementations of the first aspect, the second aspect, or the third aspect, the second cell group includes only one cell, and the cell is a cell in which the first data is initially transmitted or a cell in which the first data is transmitted most recently. The cell in which the first data is initially transmitted is a cell in which the first data is sent for the first time. The cell in which the first data is transmitted most recently is a cell carrying the first data in transmission of the first data closest to a sending time of the first DCI. The transmission of the first data may be initial transmission or retransmission of the first data.

In this implementation, the second cell group includes only one cell. This means that when the first data is downlink data, the terminal device can retransmit the first data within the second active time by receiving or storing a downlink signal of only one cell, thereby greatly reducing a quantity of cells whose downlink signals have been received or stored by the terminal device, and greatly reducing power consumption of the terminal device. When the first data is uplink data, the terminal device needs to enable, within the second active time, in advance a radio frequency component of only one cell to prepare for transmission, thereby greatly reducing the power consumption of the terminal device. In addition, when the cell is a cell in which the first data is transmitted most recently, and the first data is downlink data, because a downlink signal of the cell has been received or stored when the first data is transmitted in the cell most recently, convenience of the technical solution is improved. When the first data is uplink data, because the radio frequency component of the cell has been enabled when the first data is transmitted most recently, the enabled state of the radio frequency component only needs to be maintained when the first data is retransmitted, thereby improving convenience of the technical solution.

In some optional implementations of the first aspect, the second aspect, or the third aspect, the second cell group is all cells that are in the first cell group and that correspond to a same scheduling cell as an initial transmission cell, and the initial transmission cell is a cell in which the first data is initially transmitted. Alternatively, the second cell group is all cells that are in the first cell group and that correspond to a same scheduling cell as a historical cell, and the historical cell is a cell in which the first data is transmitted most recently.

In this implementation, when the second cell group is all cells that are in the first cell group and that correspond to the same scheduling cell as the initial transmission cell or the historical cell, because a scheduling relationship of a cell is preconfigured, DCI in only one scheduling cell needs to be monitored in this implementation. This can also reduce the power consumption of the terminal device.

In some optional implementations of the first aspect, the second aspect, or the third aspect, the second cell group is a first preset cell group, and there is a mapping relationship between the first preset cell group and the first cell group, or there is a mapping relationship between the first preset cell group and a process number of the first data.

In some optional implementations of the first aspect, the second aspect, or the third aspect, if the first cell group includes a self-scheduling cell, the second cell group includes only a self-scheduling cell.

In this implementation, in a scenario in which the first cell group includes a self-scheduling cell, the second cell group may include only the self-scheduling cell. During data retransmission, if the first data is downlink data, the terminal device may receive or store a downlink signal of only the self-scheduling cell within the second active time. The self-scheduling cell may transmit control information at the same time and has a scheduling capability. Therefore, in a scenario in which there is only one self-scheduling cell, the terminal device can retransmit data by receiving or storing a downlink signal of only one cell (namely, the self-scheduling cell), thereby greatly reducing the power consumption. If the first data is uplink data, the terminal device needs to enable, within the second active time, in advance a radio frequency component of only the self-scheduling cell to prepare for transmission. In a scenario in which there is only one self-scheduling cell, the terminal device needs to enable a radio frequency component of only one cell in advance, thereby greatly reducing the power consumption of the terminal device.

In some optional implementations of the first aspect, the second aspect, or the third aspect, the running time is a time in which a timer is not reduced to 0 after being started, and the non-running time is a time in which the timer is not started, is stopped, or is reduced to 0 after being started. For example, for a discontinuous reception (discontinuous reception, DRX) on duration timer (drx-on Duration Timer), a running time of the timer is a time in which the timer is not reduced to 0 after being started.

A fourth aspect of this application provides a data transmission method. The method is applied to a terminal device and includes:

The terminal device monitors, in different cells within different active times, DCI used for scheduling data transmission. The data transmission herein includes initial data transmission or data retransmission. This is not specifically limited herein. The terminal device monitors first DCI from a network device in all cells in a third cell group within a first active time. The third cell group includes N cells, where N is an integer greater than or equal to 2. Optionally, the third cell group includes all cells that are configured for the terminal device and that can carry control information. In other words, the third cell group includes all scheduling cells configured for the terminal device. Within a second active time, the terminal device monitors the first DCI from the network device in all cells in a fourth cell group, and skips monitoring the DCI in a cell in the third cell group other than a cell in the fourth cell group, where each cell in the fourth cell group is a cell in the third cell group, and a quantity of cells included in the fourth cell group is less than N. Related descriptions of the first active time and the second active time are similar to those in the first aspect. Details are not described herein again.

In this application, the terminal device monitors the first DCI in different cells within different active times.

Specifically, the first DCI is monitored in all cells in the third cell group within the first active time, and the first DCI is monitored in all cells in the fourth cell group within the second active time. The quantity of cells in the fourth cell group is less than the quantity of cells in the third cell group, and each cell in the fourth cell group is a cell in the third cell group. Therefore, the terminal device does not need to monitor DCI of a cell outside the fourth cell group in the third cell group within the second active time, thereby reducing power consumption of the terminal device.

A fifth aspect of this application provides a data transmission method. The method is applied to a network device and includes:

The network device determines to send first DCI to a terminal device within a first active time or a second active time, where the first DCI is used to schedule transmission of first data, including initial transmission or retransmission of the first data. If determining to send the first DCI within the first active time, the network device sends the first DCI in a third target cell in a third cell group. If determining to send the first DCI within the second active time, the network device sends the first DCI in a fourth target cell in a fourth cell group. Related descriptions of the third cell group and the fourth cell group are similar to those in the fourth aspect. Related descriptions of the first active time and the second active time are similar to those in the first aspect. Details are not described herein again.

In this application, the network device sends the first DCI in different cells based on different times of sending the first DCI. If it is determined to send the first DCI within the second active time, the first DCI is sent in the fourth target cell in the fourth cell group. A quantity of cells in the fourth cell group is less than a quantity of cells in the third cell group, and each cell in the fourth cell group is a cell in the third cell group. Therefore, the terminal device does not need to monitor DCI of a cell outside the fourth cell group in the third cell group within the second active time, thereby reducing power consumption of the terminal device.

In some optional implementations of the fourth aspect or the fifth aspect, the fourth cell group includes only one cell, and the cell is a cell in which scheduling information of the first data is initially transmitted or a cell in which scheduling information of the first data is transmitted most recently.

In this implementation, the fourth cell group includes only one cell. This means that the terminal device can receive the first DCI by monitoring only one cell, thereby greatly reducing a quantity of cells monitored by the terminal device, and greatly reducing the power consumption of the terminal device. In addition, when the cell is a cell in which the scheduling information of the first data is transmitted most recently, because the cell has been monitored when the scheduling information of the first data is transmitted in the cell most recently, convenience of the technical solution is improved.

In some optional implementations of the fourth aspect or the fifth aspect, the fourth cell group is a second preset cell group, and there is a mapping relationship between the second preset cell group and the third cell group, or there is a mapping relationship between the second preset cell group and a process number of the first data.

In some optional implementations of the fourth aspect or the fifth aspect, the running time is a time in which a timer is not reduced to 0 after being started, and the non-running time is a time in which the timer is not started, is stopped, or is reduced to 0 after being started.

A sixth aspect of this application provides a communication apparatus. The communication apparatus includes a module configured to implement the method according to any one of the first aspect to the fifth aspect or the possible implementations of the first aspect to the fifth aspect. Beneficial effects of the communication apparatus are shown above. Details are not described herein again.

A seventh aspect of this application provides a communication apparatus, including a processor and an interface circuit. The interface circuit is configured to: receive a signal from another communication apparatus and transmit the signal to the processor, or send a signal from the processor to another communication apparatus. The processor is configured to implement, by using a logic circuit or executing code instructions, the method according to any one of the first aspect to the fifth aspect or the possible implementations of the first aspect to the fifth aspect.

An eighth aspect of this application provides a computer-readable storage medium. The storage medium stores a computer program or instructions. When the computer program or instructions are executed by a communication apparatus, the method according to any one of the first aspect to the fifth aspect or the possible implementations of the first aspect to the fifth aspect is implemented.

A ninth aspect of this application provides a computer program product. When the computer program product is executed by a processor, the method according to any one of the first aspect to the fifth aspect or the possible implementations of the first aspect to the fifth aspect is implemented.

Beneficial effects of any one of the seventh aspect to the ninth aspect are similar to those of any one of the first aspect to the fifth aspect or the possible implementations of the first aspect to the fifth aspect. Details are not described herein again.

**BRIEF DESCRIPTION OF DRAWINGS**

FIG. 1 is a diagram of an architecture of a communication system to which an embodiment of this application is applied;

FIG. 2 is a schematic flowchart of a data transmission method according to an embodiment of this application;

FIG. 3 is a diagram of an active time according to an embodiment of this application;

FIG. 4 is a diagram of cell configurations according to an embodiment of this application;

FIG. 5 is a diagram of data retransmission according to an embodiment of this application;

FIG. 6 is another schematic flowchart of a data transmission method according to an embodiment of this application;

FIG. 7 is another schematic flowchart of a data transmission method according to an embodiment of this application;

FIG. 8 is a diagram of a structure of a communication apparatus according to an embodiment of this application; and

FIG. 9 is a diagram of another structure of a communication apparatus according to an embodiment of this application.

## DESCRIPTION OF EMBODIMENTS

Embodiments of this application provide a data transmission method and apparatus to reduce power consumption of a terminal device.

The following describes embodiments of this application with reference to the accompanying drawings. A person of ordinary skill in the art may know that the technical solutions provided in embodiments of this application are also applicable to similar technical problems with development of technologies and emergence of new scenarios.

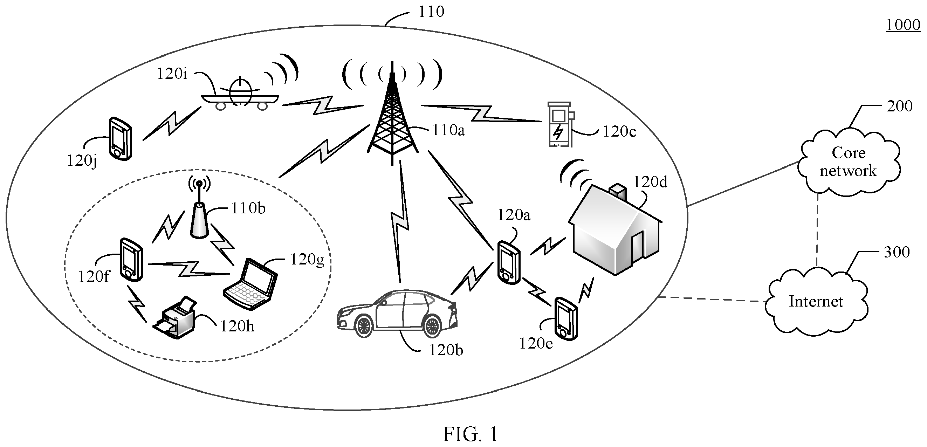

FIG. 1 is a diagram of an architecture of a communication system to which an embodiment of this application is applied.

As shown in FIG. 1, the communication system 1000 includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN node may be referred to as a network device. The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in a third generation partnership project (3rd generation partnership project, 3GPP). The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a fifth generation (5th generation, 5G) mobile communication system, a next-generation NodeB in a sixth generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

A terminal is a device having a wireless transceiver function, and may send a signal to a base station, or receive a signal from a base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device; or may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, 110a and 120i communicates with each other by using a radio air interface protocol. Certainly, 110a and 120i may alternatively communicate with each other by using an interface protocol between base stations. In this case, for 110a, 120i is also a base station. Therefore, both the base station and the terminal may be collectively referred to as communication apparatuses. 110a and 110b each in FIG. 1 may be referred to as a communication apparatus having a function of a base station. 120a to 120j each in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both a licensed spectrum and an unlicensed spectrum; or communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that has established the wireless connection to the terminal is referred to as a serving cell of the terminal. When communicating with the serving cell, the terminal is further interfered by a signal from a neighboring cell.

It can be understood that in embodiments of this application, a physical downlink shared channel (physical downlink shared channel, PDSCH), a PDCCH, and a physical uplink shared channel (physical uplink shared channel, PUSCH) are merely examples of a downlink data channel, a downlink control channel, and an uplink data channel respectively. In different systems and different scenarios, the data channel and the control channel may have different names. This is not limited in embodiments of this application.

The following describes related concepts that may be used in embodiments of this application.

Self-scheduling cell: A downlink carrier of a cell carries a control channel, and uplink and downlink data channels of the cell are scheduled. In this case, the cell is a self-scheduling cell, and the cell is both a cell for scheduling and a cell to be scheduled. The cell for scheduling may also be referred to as a scheduling cell, which is a cell bearing a control channel; and the cell to be scheduled may be referred to as a scheduled cell, which is a cell bearing a data channel.

Cross-carrier scheduling: In NR, a terminal supporting carrier aggregation corresponds to a plurality of cells, and data may be transmitted on a plurality of carriers. One cell may be configured with one downlink carrier, or may be configured with one or more uplink carriers. In a plurality of cells with carriers aggregated, a downlink carrier of one cell bears a control channel, and uplink and downlink data channel scheduling of another cell may be performed. Such a scheduling form is referred to as cross-carrier scheduling (cross carrier scheduling, CCS).

Data retransmission: Data sent by a network device to a terminal device is referred to as downlink data, and data sent by the terminal device to the network device is referred to as uplink data. Based on this, data retransmission is classified into uplink data retransmission and downlink data retransmission. If the network device receives an error answer from the terminal device after sending the downlink data to the terminal device, the network device determines that the downlink data fails to be transmitted this time, and retransmits the downlink data. If the network device invokes, by using a control channel, the terminal device to send the uplink data, and the network device fails to parse the uplink data after receiving the uplink data, the network device may determine that the uplink data fails to be transmitted this time, and re-schedule transmission of the uplink data. In general, during data retransmission, the network device sends scheduling information again to schedule transmission of the uplink data or the downlink data.

UE C-DRX mechanism: The UE C-DRX mechanism is a DRX mechanism of UE in a radio resource control connected (radio resource control_CONNECTED, RRC_ CONNECTED) state.

In a C-DRX mechanism on a terminal side, the UE may periodically monitor the PDCCH based on a DRX cycle configured by an access network device. A DRX cycle usually includes two time periods: an active time (active time) and a non-active time (non-active time). The UE listens to the PDCCH at a PDCCH monitoring occasion within the active time, and may be in a sleep state within the non-active time, and does not listen to the PDCCH, thereby reducing power consumption of the terminal.

It should be noted that the C-DRX mechanism is mainly used to control a PDCCH scrambled by the following radio network temporary identifiers (radio network temporary identifier, RNTI): a cell-radio network temporary identifier (cell-radio network temporary identifier, C-RNTI), a cancellation indication-radio network temporary identifier (cancellation indication-radio network temporary identifier, CI-RNTI), a configured scheduling-radio network temporary identifier (configured scheduling-radio network temporary identifier, CS-RNTI), a scrambling-radio network temporary identifier (interruption-radio network temporary identifier, INT-RNTI), a slot format indicator-radio network temporary identifier (slot format indicator-radio network temporary identifier, SFI-RNTI), a semi-persistent-channel state information-radio network temporary identifier (semi-persistent-channel state information-radio network temporary identifier, SP-CSI-RNTI), a transmit power control-physical uplink control channel-radio network temporary identifier (transmit power control-physical uplink control channel-radio network temporary identifier, TPC-PUCCH-RNTI), a transmit power control-physical uplink shared channel-radio network temporary identifier (transmit power control-physical uplink shared channel-radio network temporary identifier, TPC-PUSCH-RNTI), a transmit power control-sounding reference signal-radio network temporary identifier (transmit power control-sounding reference signal-radio network temporary identifier, TPC-SRS-RNTI), and an artificial intelligence-radio network temporary identifier (artificial intelligence-radio network temporary identifier, AI-RNTI). That is, in the non-active time, the UE does not listen to the PDCCH scrambled by the RNTI.

The active time includes running times of a DRX-on duration timer (drx-onDurationTimer), a DRX-inactivity timer (drx-InactivityTimer), a DRX-downlink retransmission timer (drx-RetransmissionTimerDL), and a DRX-uplink retransmission timer (drx-RetransmissionTimerUL). The active time further includes: a running time of a random access-contention resolution timer (ra-ContentionResolutionTimer) or a running time of a message B-response window (msgB-Response-Window) (used for 2-step random access contention resolution), a waiting time after the UE sends a scheduling request (scheduling request, SR) on the PUCCH, and a time period in which the UE has not received a newly transmitted PDCCH after successfully receiving a random access response (random access response, RAR) based on non-contention-based random access.

drx-onDurationTimer: An access network device configures a length of the drx-onDurationTimer for UE by using RRC signaling. A long DRX cycle (Long DRX cycle) is used as an example. A parameter (drx-LongCycle) of a length of the long DRX cycle, a parameter (drx-StartOffset) used to determine a subframe at which the DRX cycle starts, and a slot offset (drx-SlotOffset) in the subframe at which the DRX cycle starts are further configured. If the long DRX cycle is used, the terminal starts drx-onDurationTimer (onDurationTimer for short below) when a subframe number (subframe number) meets the following formula:

$$[(\text{SFN} \times 10) + \text{subframe number}] \bmod (\text{drx-LongCycle}) = \text{drx-StartOffset}$$

The SFN is a system frame number, and modulo represents a modulo operation. A system frame may also be referred to as a radio frame. One radio frame is 10 ms, one radio frame may include a plurality of subframes (subframe), and each subframe includes a plurality of slots. That is, onDurationTimer is started after the subframe at which the long DRX cycle starts is offset by drx-SlotOffset. If a short DRX cycle (short DRX cycle) is used, the terminal device starts the drx-onDurationTimer when the subframe number meets the following formula:

$$[(\text{SFN} \times 10) + \text{subframenumber}] \bmod (\text{drx-ShortCycle}) = (\text{drx-StartOffset}) \bmod (\text{drx-ShortCycle})$$

That is, onDurationTimer is started after the subframe at which the short DRX cycle starts is offset by drx-SlotOffset.

The access network device may send a media access control-control element (media access control-control element, MAC-CE) to switch a long DRX cycle to a short DRX cycle or switch a short DRX cycle to a long DRX cycle. In addition, the access network device may configure a timer drx-ShortCycleTimer for the UE. When the device is configured to operate in a short DRX cycle and a time of the timer expires, the device is configured to automatically switch to a long DRX cycle.

The two parameters drx-LongCycle and drx-ShortCycle are different and are not used at the same time. Therefore, it may be considered that a UE C-DRX parameter includes two DRX parameter groups. Periodicities in the two DRX parameter groups are different, and other parameters such as drx-onDurationTimer and drx-InactivityTimer are the same. The access network device may configure the same parameters only once, and the terminal receives the configuration only once. There is one active DRX parameter group in the two DRX parameter groups. When the long DRX cycle is used, the active parameter group is a DRX parameter group including drx-LongCycle. When the short DRX cycle is used, the active parameter group is a DRX parameter group including drx-ShortCycle.

The C-DRX parameter configured by the access network device for the UE by using the RRC signaling may be specifically shown in Table 1. A condition for triggering drx-InactivityTimer, drx-RetransmissionTimerDL, and drx-RetransmissionTimerUL is shown in Table 1. To be specific, the three timers are started only when data is transmitted.

Table 1

| C-DRX parameter | Description |
|---|---|
| drx-SlotOffset | Indicates a time offset before drx-onDurationTimer is started. |
| drx-LongCycleStartOffset | Includes two parameters: drx-LongCycle and drx-StartOffset, which respectively represent duration of a long DRX cycle and a time at which a DRX cycle starts. |
| drx-ShortCycle | Duration of the short DRX cycle<br>The short DRX cycle is optional, and the long DRX cycle and the short DRX cycle may be switched. |
| drx-ShortCycleTimer | Indicates on-duration in which the UE uses the short DRX cycle, where the parameter is optional. |
| drx-onDurationTimer | Indicates duration after the DRX cycle starts, where a PDCCH is monitored within the duration of the timer. |
| drx-InactivityTimer | When it is detected that the PDCCH indicates initial transmission of an uplink (uplink, UL) or a downlink (downlink, DL), the timer is started (or restarted), and the PDCCH continues to be monitored within the duration of the timer.<br>It can be understood that drx-InactivityTimer prolongs an active time of the DRX cycle. |
| drx-HARQ-RTT-TimerDL | Indicates a minimum time length for which the UE needs to wait before DL retransmission scheduling may be received. Each DL hybrid automatic repeat request (hybrid automatic repeat request, HARQ) process (process) corresponds to one timer.<br>If it is detected that the PDCCH indicates downlink scheduling, a timer corresponding to the HARQ process is started after a HARQ feedback. |
| drx-HARQ-RTT-TimerUL | Indicates a minimum time length for which the UE needs to wait before UL retransmission scheduling may be received. Each UL HARQ process corresponds to one timer.<br>If it is detected that the PDCCH indicates uplink scheduling, the timer corresponding to the HARQ process is started after a PUSCH (after a $1^{st}$ PUSCH if the PDCCH schedules a bundle of (a bundle of) PUSCHs). |

(continued)

| C-DRX parameter | Description |
| --- | --- |
| drx-RetransmissionTimerDL | Indicates a maximum time length for which the UE expects to receive the DL retransmission scheduling. Each DL HARQ process corresponds to one timer. When receiving the PDCCH for retransmission scheduling in the DL HARQ process, the UE immediately stops the timer. If drx-HARQ-RTT-TimerDL expires and a PDSCH corresponding to the HARQ process is not correctly decoded, drx-RetransmissionTimerDL of the process is started. |
| drx-RetransmissionTimerUL | Indicates a maximum time length for which the UE expects to receive the UL retransmission scheduling. Each UL HARQ process corresponds to one timer. When receiving the PDCCH for retransmission scheduling in the UL HARQ process, the UE immediately stops the timer. If drx-HARQ-RTT-TimerUL expires, drx-RetransmissionTimerUL corresponding to the HARQ process is started. |

A scenario corresponding to the data transmission method provided in this embodiment of this application is a data retransmission scenario. During data retransmission, the network device selects a scheduling cell to transmit control information, so as to schedule data retransmission, and retransmitted data is carried in a scheduled cell. In this case, the terminal device not only needs to determine the scheduling cell used to transmit scheduling information for data retransmission, but also needs to determine the scheduled cell used to retransmit the data. The following separately describes the two aspects.

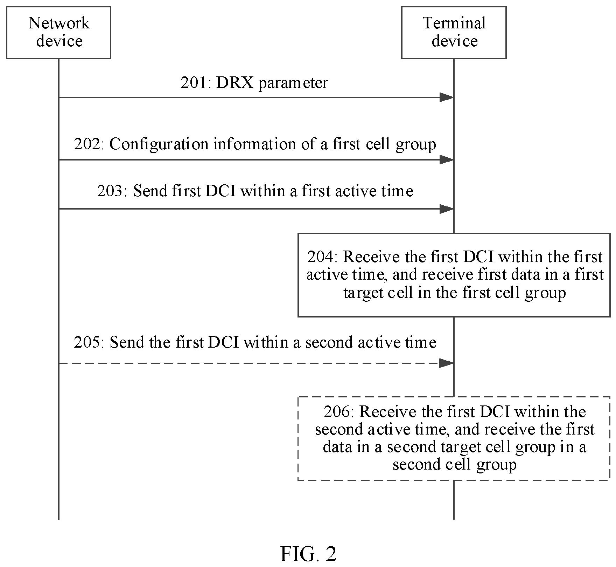

The following uses downlink data retransmission as an example to describe a solution of determining a scheduled cell. FIG. 2 is a schematic flowchart of a data transmission method according to an embodiment of this application. The method includes the following steps.

201: A network device sends a DRX parameter to a terminal device.

The terminal device does not need to continuously exchange information with the network device. Instead, there is a specific time interval. If the terminal device continuously listens to a control channel, unnecessary power consumption is caused. Therefore, in a DRX scenario, on a premise of ensuring effective data transmission, the terminal device periodically enters a sleep state and an active state, and does not listen to the control channel in the sleep state, and listens to the control channel in the active state. The DRX parameter is configured for the terminal device, so that the terminal device is in the DRX scenario.

The DRX parameter may be defined at a protocol layer above a physical layer, so that the network device sends the DRX parameter to the terminal device. The protocol layer above the physical layer may also be referred to as a higher layer, for example, a radio resource control layer or a media access control layer. The terminal device is in an active state in an active time defined by the DRX parameter. The active time in this embodiment of this application includes a first active time and a second active time.

In this embodiment of this application, the first active time is a running time of a DRX-on duration timer or a running time of a DRX-inactivity timer. The second active time is an intersection time period of a non-running time of the DRX-on duration timer, a non-running time of the DRX-inactivity timer, and a running time of a retransmission timer of a process of first data. When the first data is downlink data, the retransmission timer of the process of the first data is a downlink retransmission timer. When the first data is uplink data, the retransmission timer of the process of the first data is an uplink retransmission timer. The running time is a time in which a timer is not reduced to 0 after being started. The non-running time is a time in which a corresponding timer is not started, is stopped, or is reduced to 0 after being started. The intersection time period is an overlapping time of the non-running time of the DRX-on duration timer, the non-running time of the DRX-inactivity timer, and the running time of the retransmission timer of the process of the first data.

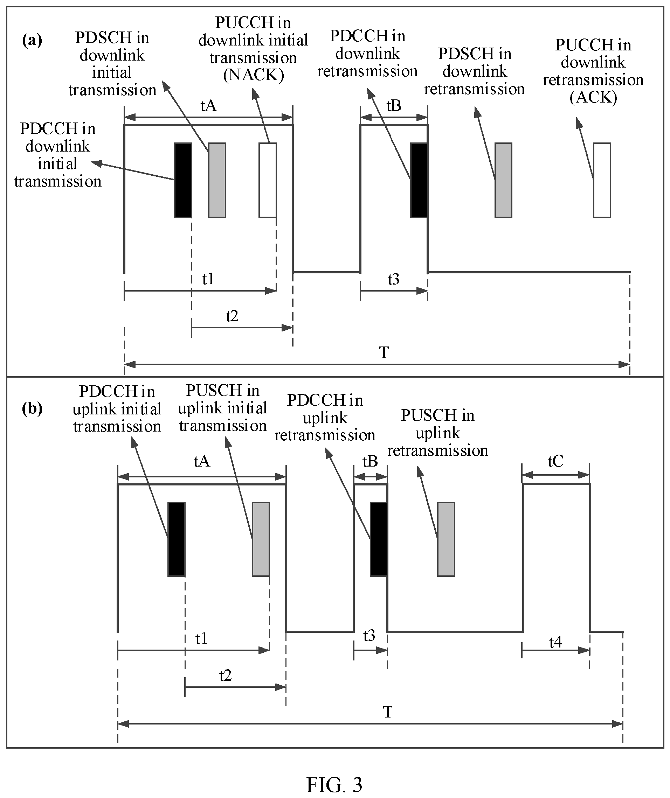

It should be noted that the first active time and the second active time in this embodiment of this application are specific to the terminal device, and both the network device and the terminal device can determine the first active time and the second active time. The following describes the first active time and the second active time with reference to a diagram. FIG. 3 is a diagram of active times according to an embodiment of this application.

For example, retransmission occurs after initial transmission. (a) in FIG. 3 shows retransmission of downlink data in a DRX cycle, and (b) in FIG. 3 shows retransmission of uplink data.

As shown in (a) in FIG. 3, one DRX cycle T includes a first active time tA and a second active time tB. The first active time tA includes t1 or t2. The second active time tB includes a time that is other than t1 and t2 in the DRX cycle T and that overlaps t3. t1 indicates a time in which a timer drx-onDurationTimer starts to continuously listen to a PDCCH from a start moment of the DRX cycle, in other words, a running time of the timer drx-onDurationTimer is t1. t2 indicates a time in which a timer drx-InactivityTimer is started and performs continuous listening when detecting that the PDCCH indicates downlink initial transmission, in other words, a running time of the timer drx-InactivityTimer is t2. t3 indicates a time in which a timer drx-RetransmissionTimer continuously listens to and detects the PDCCH for downlink retransmission from a time at which downlink retransmission is expected to be received, in other words, a running time of the timer drx-RetransmissionTimer is t3.

As shown in (b) in FIG. 3, one DRX cycle T includes a first active time tA and second active times tB and tC. The first active time tA includes t1 or t2. The second active time tB includes a time that is other than t1 and t2 in the DRX cycle T and that overlaps t3 and t4. t1 indicates a time in which a timer drx-onDurationTimer starts to continuously listen to a PDCCH from a start moment of the DRX cycle, in other words, a running time of the timer drx-onDurationTimer is t1. t2 indicates a time in which a timer drx-InactivityTimer is started and performs continuous listening when detecting that the PDCCH indicates uplink initial transmission, in other words, a running time of the timer drx-InactivityTimer is t2. t3 and t4 indicate times in which a timer drx-RetransmissionTimer continuously listens to the PDCCH for uplink retransmission from a time at which uplink retransmission is expected to be received, in other words, a running time of the timer drx-RetransmissionTimer is t3 and t4.

202: The network device sends configuration information of a first cell group to the terminal device.

The network device may further send the configuration information of the first cell group to the terminal device. The first cell group indicates a scheduled cell group of the terminal device. The first cell group includes M cells, and M is an integer greater than or equal to 2.

For example, the first cell group may be all serving cells of the terminal device, all active serving cells of the terminal device, all active and non-sleep serving cells of the terminal device, all serving cells of the terminal device configured with a downlink carrier, all active serving cells of the terminal device configured with a downlink carrier, all active and non-sleep serving cells of the terminal device configured with a downlink carrier, all serving cells of the terminal device configured with an uplink carrier, all active serving cells of the terminal device configured with an uplink carrier, or all active and non-sleep serving cells of the terminal device configured with an uplink carrier.

For example, the network device configures a serving cell set for the terminal device by using higher layer signaling, and the higher layer signaling includes cell sequence numbers of all serving cells in the serving cell set. The first cell group may be the serving cell set, all active serving cells in the serving cell set, all active and non-sleep serving cells in the serving cell set, all serving cells configured with a downlink carrier in the serving cell set, all active serving cells configured with a downlink carrier in the serving cell set, all active and non-sleep serving cells configured with a downlink carrier in the serving cell set, all serving cells configured with an uplink carrier in the serving cell set, all active serving cells configured with an uplink carrier in the serving cell set, or all active and non-sleep serving cells configured with an uplink carrier in the serving cell set.

For example, for uplink, the network device configures a serving cell set for the terminal device by using higher layer signaling. The higher layer signaling includes cell sequence numbers of all serving cells in the serving cell set. The first cell group may be the serving cell set, all active serving cells in the serving cell set, or all active and non-sleep serving cells in the serving cell set.

For example, for downlink, the network device configures a serving cell set for the terminal device by using higher layer signaling. The higher layer signaling includes cell sequence numbers of all serving cells in the serving cell set. The first cell group may be the serving cell set, all active serving cells in the serving cell set, or all active and non-sleep serving cells in the serving cell set.

In some optional implementations, when there are a plurality of first cell groups, any two first cell groups do not include a same serving cell.

In some optional implementations, when there are a plurality of downlink-related first cell groups, any two downlink-related first cell groups do not include a same serving cell. When there are a plurality of uplink-related first cell groups, any two uplink-related first cell groups do not include a same serving cell. When an uplink-related first cell group and a downlink-related first cell group exist, the uplink-related first cell group and the downlink-related first cell group may be the same or different.

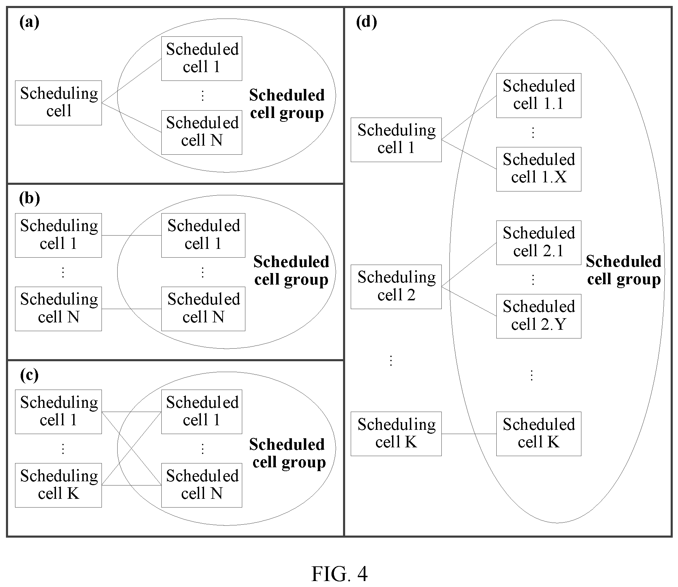

During actual application, there are a plurality of possible configuration statuses of the first cell group. FIG. 4 is a diagram of cell configurations according to an embodiment of this application.

As shown in (a) in FIG. 4, one scheduling cell and N scheduled cells may be configured for a terminal device, and N is an integer greater than 1. In this case, all the N scheduled cells are scheduled by a common scheduling cell. Optionally, the scheduling cell may be any one of the N scheduled cells, that is, a self-scheduling cell exists, and the self-scheduling cell is both a scheduling cell and a scheduled cell.

As shown in (b) in FIG. 4, N scheduling cells and N scheduled cells that are in one-to-one correspondence may be configured for a terminal device, each scheduling cell uniquely schedules one scheduled cell, and each scheduled cell is uniquely scheduled by one scheduling cell. Optionally, in the embodiment shown in (b) in FIG. 4, N cells may be configured for the terminal device, and each cell is a self-scheduling cell.

As shown in (c) in FIG. 4, K scheduling cells and N scheduled cells may be configured for a terminal device, and both K and N are integers greater than 1. All the K scheduling cells may schedule any scheduled cell in a scheduled cell group.

As shown in (d) in FIG. 4, K scheduling cells and N scheduled cells may be configured for a terminal device. In these cells, each scheduling cell schedules one or more scheduled cells in a scheduled cell group. For example, in the embodiment shown in (d) in FIG. 4, a scheduling cell 1 schedules a scheduled cell 1.1 to a scheduled cell 1.X; and a scheduling cell 2 schedules a scheduled cell 2.1 to a scheduled cell 2.Y. Both X and Y are integers greater than 1.

It should be noted that FIG. 4 shows merely examples of cell configurations. During actual application, a cell configured for a terminal device may alternatively be in another case. This is not specifically limited herein. For example, in the cells configured for the terminal device, a scheduling cell may be further configured for some or all of the scheduled cells on the basis that each scheduled cell shown in (d) in FIG. 4 corresponds to one scheduling cell. That is, in the scheduled cell group, a scheduled cell that corresponds to a plurality of scheduling cells that may be scheduled by the plurality of scheduling cells may further exist.

It should be noted that an execution sequence of step 201 and step 202 is not limited in this embodiment of this application. During actual application, step 201 may be performed first, or step 202 may be performed first, or step 201 and step 202 may be performed simultaneously. This is not specifically limited herein.

203: The network device sends first DCI within the first active time.

If the network device determines to send the first DCI within the first active time, the first DCI indicates to retransmit the first data in a first target cell in the first cell group. Sending the first DCI within the first active time means that a time at which the first DCI is sent is included in the first active time and may be any time between a start moment and an end moment of the first active time. This is not specifically limited herein. The first data may be one or more transport blocks (transport block, TB) or one or more coded block groups (coded block group, CBG). This is not specifically limited herein.

Optionally, the first target cell is any cell in the first cell group, or the first target cell is any cell that is in the first cell group and that is different from a cell in which the first data is transmitted most recently. The previous transmission of the first data may be initial transmission of the first data, or may be retransmission of the first data. This is not specifically limited herein. In conclusion, the first target cell in which the first data is retransmitted is a cell in the first cell group, and cannot be a cell outside the first cell group.

For example, it is assumed that the first target cell is any cell that is in the first cell group and that is different from the cell in which the first data is transmitted most recently. For example, it is assumed that the first cell group includes a cell 1 to a cell 5, and a cell in which the first data is transmitted most recently is the cell 1. In this case, a cell that is indicated by the first DCI and that is used to retransmit the first data is any one of the cell 2 to the cell 5, so as to implement cross-cell data retransmission.

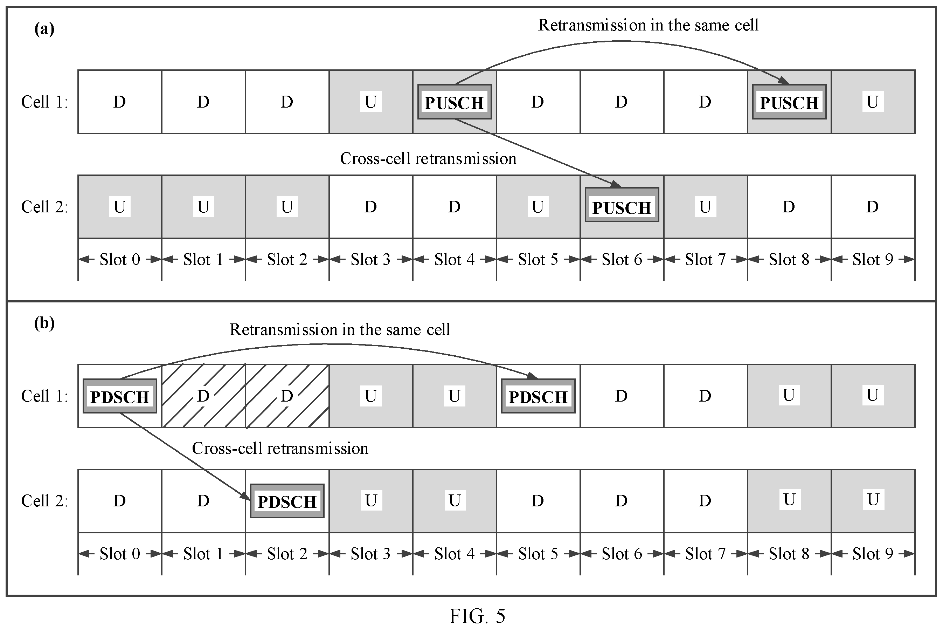

The following describes cross-cell retransmission with reference to a diagram. FIG. 5 is a diagram of data retransmission according to an embodiment of this application. In the embodiment shown in FIG. 5, a white box represents a downlink (down, D), and a light gray box represents an uplink (up, U).

In the embodiment shown in (a) in FIG. 5, both a cell 1 and a cell 2 operate on a time division multiplexing (time division duplex, TDD) carrier, and uplinks and downlinks are configured in a complementary manner. That the uplinks and downlinks are configured in the complementary manner may be understood as that the uplinks and downlinks are configured in an opposite manner, to be specific, when the cell 1 enables an uplink carrier, and the cell 2 enables a downlink carrier; and when the cell 1 enables a downlink carrier, the cell 2 enables an uplink carrier.

As shown in (a) in FIG. 5, it is assumed that retransmission needs to be performed after a PUSCH is initially transmitted in a slot 4 (slot 4) of the cell 1. If retransmission is performed in the same cell (that is, initial transmission and retransmission of a same process need to be performed on a same carrier), retransmission can be performed earliest in a slot 8 of the cell 1. If cross-cell retransmission is performed (that is, initial transmission and retransmission of a same process may be performed on different carriers), retransmission may be performed earliest in a slot 5 of the cell 2. In consideration of a factor such as a preparation time, in the embodiment shown in (a) in FIG. 5, an example in which retransmission is performed in a slot 6 of the cell 2 is used. It can be learned from the descriptions in this paragraph that when TDD is used in different cells and uplink and downlink configurations are complementary, cross-cell retransmission can reduce a data transmission delay and improve spectrum utilization.

In the embodiment shown in (b) in FIG. 5, both a cell 1 and a cell 2 operate on a TDD carrier, and have same uplink and downlink configurations. As shown in (b) in FIG. 5, it is assumed that retransmission needs to be performed after a PDSCH is initially transmitted in a slot 0 of the cell 1. When retransmission of this process cannot be performed in a slot 1 and a slot 2 of the cell 1 due to relatively heavy loads, if retransmission is performed in the same cell, retransmission can be performed earliest in a slot 5 of the cell 1. If retransmission is performed across cells, retransmission can be performed earliest in a slot 1 of the cell 2. In consideration of a factor such as a preparation time, in the embodiment shown in (b) in FIG. 5, an example in which retransmission is performed in a slot 2 of the cell 2 is used. It can be learned from the descriptions in this paragraph that when time division duplex is used in different cells and uplink and downlink configurations are the same, cross-cell retransmission can reduce a data transmission delay and improve spectrum utilization.

It may be understood that as described above, one cell may be configured with one downlink carrier, or may be configured with one or more uplink carriers. A carrier is used to carry a data channel or a control channel, the data channel is used to transmit data, and the control channel is used to transmit control information. Therefore, cross-cell retransmission may also be referred to as cross-carrier retransmission.

It should be further noted that a prerequisite for sending the first DCI by the network device to the terminal device is that previous transmission of the first data fails. In other words, before sending the first DCI, the network device determines that the first data is incorrectly transmitted. Initial transmission of the first data is carried in a cell in the first cell group. The first data may be uplink data or may be downlink data. Therefore, as described above, there are a plurality of possible manners in which the network device determines that the first data fails to be transmitted. If the first data is uplink data, when the network device fails to parse the first data, the network device determines that the first data fails to be transmitted. If the first data is downlink data, when the network device receives an error answer for the first data from the terminal device, the network device determines that the first data fails to be transmitted. In addition, that the first data fails to be transmitted means that most recent transmission of the first data fails. This may be that initial transmission of the first data fails, or may be that retransmission of the first data fails. This is not specifically limited herein.

In addition, it should be further noted that in this application, a time sequence in which the network device sends the first DCI and sends the PDSCH carrying the first data is not limited. The network device may first send the first DCI, or may first send the PDSCH, or may simultaneously send the first DCI and the PDSCH. This is not specifically limited herein.

204: The terminal device receives the first DCI within the first active time, and receives the first data in the first target cell in the first cell group.

If the network device sends the first DCI to the terminal device within the first active time to schedule retransmission of the first data, the terminal device may receive the first DCI within the first active time, and determine the cell carrying the retransmission of the first data is the first target cell in the first cell group. The first target cell is any cell in the first cell group, or is any cell that is in the first cell group and that is different from a cell in which the first data is transmitted most recently.

For example, for downlink data retransmission, the first DCI indicates the network device to send the first data to the terminal device in the first target cell, and the terminal device receives the first data in the first target cell. That the terminal device receives the first data includes demodulating and decoding the first data.

Optionally, if the first target cell is any cell in the first cell group, the terminal device continuously receives and stores downlink signals of all cells in the first cell group within the first active time. When the first DCI is received and the first DCI schedules the retransmission of the first data, because the downlink signals of all the cells in the first cell group are received and stored, if the retransmission of the first data is carried in any cell in the first cell group, the terminal device may parse the retransmission of the first data even if the retransmission of the first data starts before parsing of the first DCI is completed.

Similarly, it is assumed that a cell in the first cell group in which the first data is transmitted most recently is a cell A. If the first target cell is any cell that is in the first cell group and that is different from the cell in which the first data is transmitted most recently, that is, the first target cell is any cell in the first cell group other than the cell A, the terminal device continuously receives and stores downlink signals of all cells in the first cell group except the cell A within the first active time. When the first DCI is received and the first DCI schedules the retransmission of the first data, because the downlink signals of all the cells in the first cell group other than the cell A are received and stored, if the retransmission of the first data is carried in any cell in the first cell group other than the cell A, the terminal device may parse the retransmission of the first data even if the retransmission of the first data starts before parsing of the first DCI is completed.

In addition, it should be noted that if the terminal device receives, within the first active time, retransmission scheduling information for retransmitting the first data in a cell outside the first cell group, the terminal device does not process the retransmission of the first data in the cell outside the first cell group. In other words, the terminal device receives the first DCI within the first active time, and the first DCI indicates to retransmit the first data in the first target cell. The terminal device does not expect the first target cell to be a cell outside the first cell group. If the first DCI indicates that the cell in which data retransmission is performed is a cell outside the first cell group, the terminal device does not receive the first data in the cell outside the first cell group.

205: The network device sends the first DCI within the second active time.

If the network device sends the first DCI to the terminal device within the second active time, the first DCI indicates to transmit the first data in a second target cell in a second cell group. Sending the first DCI within the second active time means that a time at which the network device sends the first DCI is included in the second active time and may be any moment between a start moment and an end moment of the second active time. This is not specifically limited herein.

In addition, each cell in the second cell group is a cell in the first cell group, and a quantity of cells included in the second cell group is less than a quantity of cells in the first cell group. In other words, the second cell group is included in the first cell group, and the quantity of cells included in the second cell group is less than M. In conclusion, the second target cell in which the first data is retransmitted is any cell in the second cell group, and cannot be a cell outside the second cell group. In other words, the terminal device receives the first DCI within the second active time, and the first DCI indicates to retransmit the first data in the second target cell. The terminal device does not expect the second target cell to be a cell outside the second cell group. If the first DCI indicates that the cell in which data retransmission is performed is a cell outside the second cell group, the terminal device does not receive the first data in the cell outside the first cell group.

In this embodiment of this application, there are a plurality of possibilities for cells included in the second cell group. Descriptions are provided below.

In some optional implementations, the second cell group may include only one cell, and the cell may be a cell in which the first data is initially transmitted or a cell in which the first data is transmitted most recently. In this case, the second cell group may be specified in an air interface protocol of a third generation partnership project (the third generation partnership project, 3GPP). The cell in which the first data is initially transmitted is a cell in which the first data is sent for the first time. The cell in which the first data is transmitted most recently is a cell carrying the first data in transmission of the first data closest to a sending time of the first DCI. In addition, the most recent transmission of the first data may be initial transmission of the first data, or may be retransmission of the first data. This is not specifically limited herein.

In this implementation, the second cell group includes only one cell. This means that when the first data is downlink data, the terminal device can receive the retransmitted first data within the second active time by receiving or storing only one scheduled cell, thereby greatly reducing a quantity of cells whose downlink signals have been received or stored by the terminal device, and greatly reducing power consumption of the terminal device. In addition, when the cell is a cell in which the first data is transmitted most recently, and the first data is downlink data, because a downlink signal of the cell has been received or stored when the first data is transmitted in the cell most recently, it only needs to continue receiving or storing the downlink signal of the cell, so that convenience of the technical solution is improved.

In some optional implementations, the second cell group is all cells that are in the first cell group and that correspond to a same scheduling cell as an initial transmission cell, and the initial transmission cell is a cell in which the first data is initially transmitted. For example, in (d) in FIG. 4, the first cell group is a scheduled cell group, and includes a scheduled cell 1.1 to a scheduled cell K. If the initial transmission cell is the scheduled cell 1.1, because the initial transmission cell 1.1 corresponds to a scheduling cell 1, the second cell group is a scheduled cell group corresponding to the scheduling cell 1, and includes the scheduled cell 1.1 to a scheduled cell 1.X shown in (d) in FIG. 4.

In some optional implementations, the second cell group is all cells that are in the first cell group and that correspond to a same scheduling cell as a historical cell, and the historical cell is a cell in which the first data is transmitted most recently. For example, in (d) in FIG. 4, the first cell group is a scheduled cell group, and includes a scheduled cell 1.1 to a scheduled cell K. If the historical transmission cell is the scheduled cell 2.1, because the historical transmission cell 2.1 corresponds to a scheduling cell 2, the second cell group is a scheduled cell group corresponding to the scheduling cell 2, and includes the scheduled cell 2.1 to a scheduled cell 2.Y shown in (d) in FIG. 4.

In this embodiment of this application, when the second cell group is all cells that are in the first cell group and that correspond to the same scheduling cell as the initial transmission cell or the historical cell, because a scheduling relationship of a cell is preconfigured, DCI in only one scheduling cell needs to be monitored in this implementation. This can also reduce the power consumption of the terminal device.

In some optional implementations, the second cell group is a first preset cell group, and there is a mapping relationship between the first preset cell group and the first cell group, or there is a mapping relationship between the first preset cell group and a process number of the first data. In this implementation, the mapping relationship between the second cell group and the first group is specified by a higher layer, and then is notified to the terminal device by using the network device. For example, process numbers 1 to 16 may be preset, and correspond to a cell 1; and process numbers 17 to 32 may be preset, and correspond to a cell 2. In this case, if the process number of the first data is 15, it may be determined that a cell carrying the first data is the cell 1.

In some optional implementations, if the first cell group includes a self-scheduling cell, the second cell group includes only a self-scheduling cell. During actual application, the first cell group may include one or more self-scheduling cells, and a quantity of cells included in the second cell group herein also varies. Descriptions are provided below.

For example, in (a) in FIG. 4, the first cell group is a scheduled cell group. It is assumed that the scheduled cell 1 is a self-scheduling cell. This means that the scheduling cell and the scheduled cell 1 are actually the same cell, and the scheduling cell is included in the scheduled cell group. In this case, the second cell group includes only the self-scheduling cell, that is, includes only the scheduling cell, or includes only the scheduled cell 1. When the retransmission of the first data is downlink data retransmission, a carrier carrying the retransmission is a downlink carrier of the scheduling cell. When the retransmission of the first data is uplink data retransmission, a carrier carrying the retransmission is an uplink carrier of the scheduling cell.

For example, in (d) in FIG. 4, the first cell group is a scheduled cell group. It is assumed that the scheduled cell 1.1 and the scheduled cell 2.1 are self-scheduling cells. Therefore, the second cell group herein includes only the scheduled cell 1.1 and the scheduled cell 2.1, or in other words, includes only the scheduling cell 1 and the scheduling cell 2.

In this embodiment of this application, in a scenario in which the first cell group includes a self-scheduling cell, the second cell group may include only the self-scheduling cell. During downlink data retransmission, the terminal device may receive or store a downlink signal of only the self-scheduling cell within the second active time. The self-scheduling cell may transmit control information at the same time and has a scheduling capability. Therefore, in a scenario in which there is only one scheduling cell, the terminal device can retransmit data by receiving or storing only one cell, thereby greatly reducing the power consumption.

In addition, it should be further noted that in this application, a time sequence in which the network device sends the first DCI and sends the PDSCH carrying the first data is not limited. The network device may first send the first DCI, or may first send the PDSCH, or may simultaneously send the first DCI and the PDSCH. This is not specifically limited herein.

206: The terminal device receives the first DCI within the second active time, and receives the first data in the second target cell in the second cell group.

If the network device sends the first DCI to the terminal device within the second active time to schedule retransmission of the first data, the terminal device may receive the first DCI within the second active time, and determine that a cell carrying the retransmission of the first data is the second target cell in the second cell group, where the second target cell is any cell in the second cell group.

For example, for downlink data retransmission, the first DCI indicates the network device to send the first data to the terminal device in the second target cell, and the terminal device receives the first data in the second target cell. The terminal device continuously receives and stores downlink signals of all cells in the second cell group within the second active time. When second DCI is received and the second DCI schedules the retransmission of the first data, because the downlink signals of all the cells in the second cell group are received and stored, if the retransmission of the first data is carried in any cell in the second cell group, the terminal device may parse the retransmission of the first data even if the retransmission of the first data starts before parsing of the second DCI is completed.

In addition, it should be noted that if the terminal device receives, within the second active time, retransmission scheduling information for retransmitting the first data in a cell outside the second cell group, the terminal device does not process the retransmission of the first data in the cell outside the second cell group. In other words, the terminal device receives the first DCI within the second active time, and the first DCI indicates to retransmit the first data in the second target cell. The terminal device does not expect the second target cell to be a cell outside the second cell group. If the first DCI indicates that the cell in which data retransmission is performed is a cell outside the second cell group, the terminal device does not receive the first data in the cell outside the second cell group.

It should be noted that in a downlink data retransmission process, it is possible that only step 203 and step 204 are performed or only step 205 and step 206 are performed. Specific execution depends on whether the network device sends the first DCI within the first active time or the second active time, or depends on whether the terminal device receives the first DCI within the first active time or the second active time. Details are not described herein.

In conclusion, in this embodiment of this application, the first DCI transmitted by the network device and the terminal device within different active times indicates different content. For downlink data retransmission, if the first DCI is transmitted within the first active time, the first DCI indicates to receive the first data in the first target cell in the first cell group. If the first DCI is transmitted within the second active time, the first DCI indicates to receive the first data in the second target cell in the second cell group. The quantity of cells in the second cell group is less than the quantity of cells in the first cell group, and each cell in the second cell group is a cell in the first cell group. Therefore, the terminal device does not need to receive or store a downlink signal of a cell outside the second cell group in the first cell group within the second active time, thereby reducing power consumption of the terminal device.

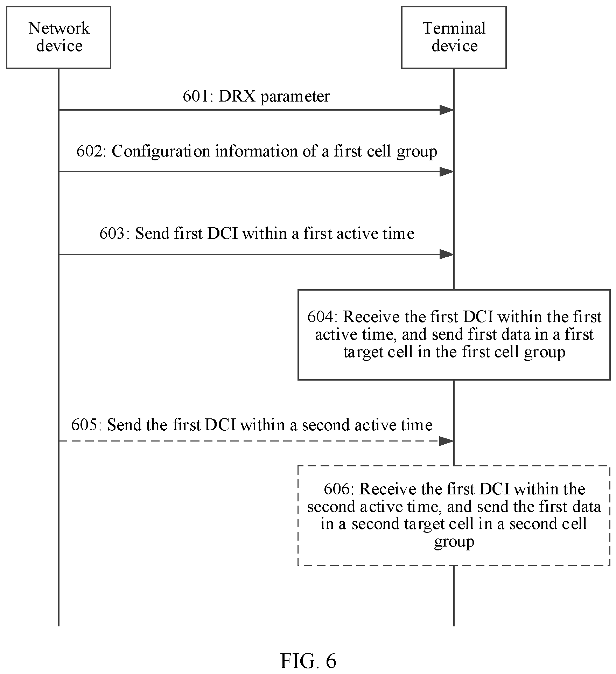

In the embodiment shown in FIG. 2, downlink data retransmission is used as an example. During actual application, uplink data retransmission may be further performed. The following describes this case. FIG. 6 is a schematic flowchart of a data transmission method according to an embodiment of this application. The method includes the following steps.

601: A network device sends a DRX parameter to a terminal device.

602: The network device sends configuration information of a first cell group to the terminal device.

603: The network device sends first DCI within a first active time.

Step 601 to step 603 are similar to step 201 to step 203. For details, refer to the foregoing descriptions. Details are not described herein again. A difference lies in that the embodiment shown in FIG. 2 describes downlink data retransmission, the first data is downlink data, and the first cell group includes all cells that are configured for the terminal device and that can carry downlink data, or the first cell group may include all cells that are configured for the terminal device and that include a downlink carrier, or the first cell group includes all scheduled cells configured for the terminal device. The embodiment shown in FIG. 6 describes uplink data retransmission, the first data is uplink data, and the first cell group may include all cells that are configured for the terminal device and that can carry uplink data, or the first cell group may include all cells that are configured for the terminal device and that include an uplink carrier, or the first cell group includes all scheduled cells configured for the terminal device.

604: The terminal device receives the first DCI within the first active time, and sends the first data in a first target cell in the first cell group.

For uplink data retransmission, the first DCI indicates the terminal device to send the first data to the network device in the first target cell, and the network device receives the first data in the first target cell. That the network device receives the first data includes demodulating and decoding the first data.

Similar to step 204, the first target cell is any cell in the first cell group, or is any cell that is in the first cell group and that is different from a cell in which the first data is transmitted most recently.

Optionally, if the first target cell is any cell in the first cell group, the terminal device continuously prepares to send uplink signals of all cells in the first cell group within the first active time, for example, opens a corresponding radio frequency chain. When the first DCI is received and the first DCI schedules retransmission of the first data, because sending preparation of the uplink signals of all the cells in the first cell group is completed, if the retransmission of the first data is carried in any cell in the first cell group, the retransmission of the first data may be performed in time.

Similarly, it is assumed that a cell in which the first data is transmitted most recently in the first cell group is a cell A. If the first target cell is any cell that is in the first cell group and that is different from the cell in which the first data is transmitted most recently, that is, the first target cell is any cell in the first cell group other than the cell A, the terminal device continuously prepares to send uplink signals of all cells in the first cell group except the cell A within the first active time, for example, opens a corresponding radio frequency chain. When the first DCI is received and the first DCI schedules retransmission of the first data, because sending preparation of the uplink signals of all the cells in the first cell group except the cell A is completed, if the retransmission of the first data is carried in any cell in the first cell group other than the cell A, the retransmission of the first data may be performed in time.

In addition, it should be noted that if the terminal device receives, within the first active time, retransmission scheduling information for retransmitting the first data in a cell outside the first cell group, the terminal device does not process the retransmission of the first data in the cell outside the first cell group. In other words, the terminal device receives the first DCI within the first active time, and the first DCI indicates to retransmit the first data in the first target cell. The terminal device does not expect the first target cell to be a cell outside the first cell group. If the first DCI indicates that the cell in which data retransmission is performed is a cell outside the first cell group, the terminal device does not send the first data in the cell outside the first cell group.

605: The network device sends the first DCI within a second active time.

Step 605 is similar to step 205. For details, refer to the foregoing descriptions. Details are not described herein again. In other words, definitions and possible implementations of the second cell group and the second target cell are similar to those in step 205. It may be understood that for uplink data retransmission, a plurality of possibilities of the second cell group have different beneficial effects.

For example, if the second cell group includes only one cell, when the first data is uplink data, the terminal device needs to enable, within the second active time, in advance a radio frequency component of only one cell to prepare for transmission, thereby greatly reducing power consumption of the terminal device. In addition, when the cell is a cell in which the first data is transmitted most recently, because the radio frequency component of the cell has been enabled when the first data is transmitted most recently, the enabled state of the radio frequency component only needs to be maintained when the first data is retransmitted, thereby improving convenience of the technical solution.

For example, if the second cell group includes only a self-scheduling cell, when the first data is uplink data, the terminal device only needs to enable, within the second active time, in advance a radio frequency component of the self-scheduling cell to prepare for transmission. In a scenario in which there is only one self-scheduling cell, the terminal device needs to enable a radio frequency component of only one cell in advance, thereby greatly reducing the power consumption of the terminal device.

606: The terminal device receives the first DCI within the second active time, and sends the first data in the second target cell in the second cell group.

It may be understood that step 606 is similar to step 206, and a difference lies in that the first data in step 206 is downlink data, and the first data in step 606 is uplink data.

For example, for uplink data retransmission, the first DCI indicates the terminal device to send the first data to the network device in the second target cell, and the network device receives the first data in the second target cell. The terminal device continuously prepares to send uplink signals of all cells in the second cell group within the second active time, for example, opens a corresponding radio frequency chain. When the second DCI is received and the second DCI schedules retransmission of the first data, because sending preparation of the uplink signals of all the cells in the second cell group is completed, if the retransmission of the first data is carried in any cell in the second cell group, the retransmission of the first data may be performed in time.

In addition, it should be noted that if the terminal device receives, within the second active time, retransmission scheduling information for retransmitting the first data in a cell outside the second cell group, the terminal device does not process the retransmission of the first data in the cell outside the second cell group. In other words, the terminal device receives the first DCI within the second active time, and the first DCI indicates to retransmit the first data in the second target cell. The terminal device does not expect the second target cell to be a cell outside the second cell group. If the first DCI indicates that the cell in which data retransmission is performed is a cell outside the second cell group, the terminal device does not send the first data in the cell outside the second cell group.

It should be noted that in an uplink data retransmission process, it is possible that only step 603 and step 604 are performed or only step 605 and step 606 are performed. Specific execution depends on whether the network device sends the first DCI within the first active time or the second active time, or depends on whether the terminal device receives the first DCI within the first active time or the second active time. Details are not described herein.

In conclusion, in this embodiment of this application, the first DCI transmitted by the network device and the terminal device within different active times indicates different content. For uplink data retransmission, if the first DCI is transmitted within the first active time, the first DCI indicates to send the first data in the first target cell in the first cell group. If the first DCI is transmitted within the second active time, the first DCI indicates to send the first data in the second target cell in the second cell group. A quantity of cells in the second cell group is less than a quantity of cells in the first cell group, and each cell in the second cell group is a cell in the first cell group. Therefore, the terminal device does not need to enable, within the second active time, in advance radio frequency components corresponding to cells outside the second cell group in the first cell group, that is, does not need to prepare for transmission for these cells, thereby reducing the power consumption of the terminal device.

It should be noted that in the foregoing descriptions, an active time of a DRX cycle is divided into the first active time and the second active time. In some optional implementations, active times may not be distinguished. Specifically, when the first data is uplink data, that is, when the uplink data is retransmitted, the data may be retransmitted by using the solution within the first active time in the embodiment shown in FIG. 6.

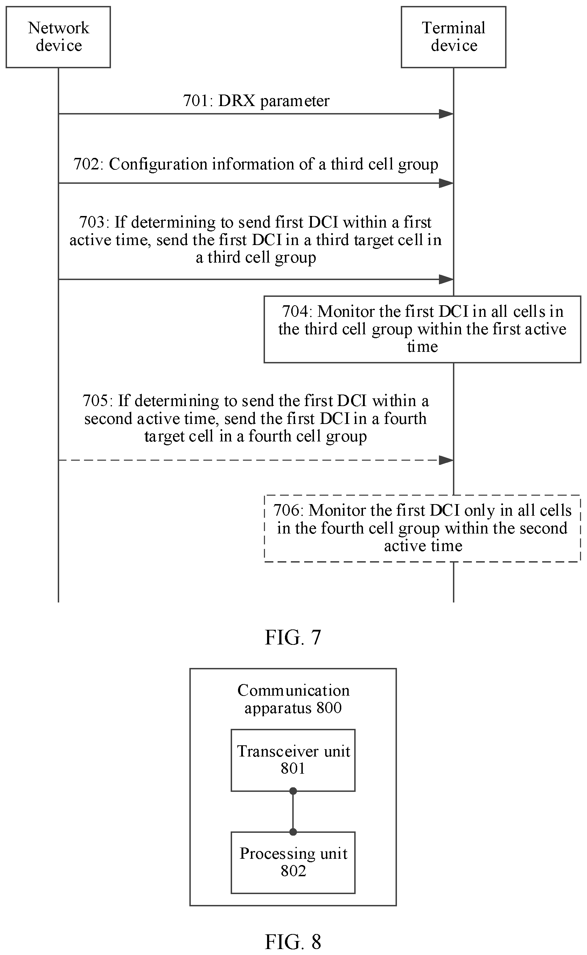

The foregoing describes how to determine a scheduled cell, and the following describes a solution of how to determine a scheduling cell in a data retransmission scenario. FIG. 7 is a schematic flowchart of data transmission according to an embodiment of this application. The procedure includes the following steps.

701: A network device sends a DRX parameter to a terminal device.

Step 701 is similar to step 201 in the embodiment shown in FIG. 2. For details, refer to the descriptions of step 201. Details are not described herein again.

702: The network device sends configuration information of a third cell group to the terminal device.

The third cell group represents a scheduling cell group of the terminal device, and the configuration information of the third cell group indicates all cells that are in cells corresponding to the terminal device and that can be used to carry a control channel. In this embodiment of this application, the third cell group includes N cells, and N is an integer greater than or equal to 2.

It should be noted that an execution sequence of step 701 and step 702 is not limited in this embodiment of this application. During actual application, step 701 may be performed first, or step 702 may be performed first, or step 701 and step 702 may be performed simultaneously. This is not specifically limited herein.

In some optional implementations, the network device may further send configuration information of a scheduled cell group (that is, the first cell group shown in FIG. 2) to the terminal device. An execution sequence of this step, step 701, and step 702 is not limited.

703: If determining to send first DCI within a first active time, the network device sends the first DCI in a third target cell in the third cell group.

Retransmission of first data scheduled by using the first DCI may be understood as retransmission scheduling information of the first data. The first active time is a running time of a discontinuous reception-on duration timer or a running time of a discontinuous reception-inactivity timer. Specific content of the first active time is described in step 201. For details, refer to the foregoing descriptions. Details are not described herein again.

It should be noted that when determining that the first data fails to be transmitted most recently, the network device may retransmit the first data, that is, send, to the terminal device, the first DCI used to schedule the retransmission of the first data. In other words, before sending the first DCI, the network device determines that the first data is incorrectly transmitted. The first data may be uplink data or may be downlink data. Therefore, as described above, there are a plurality of possible manners in which the network device determines that the first data fails to be transmitted. If the first data is uplink data, when the network device fails to parse the first data, the network device determines that the first data fails to be transmitted. If the first data is downlink data, when the network device receives an error answer for the first data from the terminal device, the network device determines that the first data fails to be transmitted. In addition, that the first data fails to be transmitted means that most recent transmission of the first data fails. This may be that initial transmission of the first data fails, or may be that retransmission of the first data fails. This is not specifically limited herein.

704. The terminal device monitors the first DCI in all cells in the third cell group within the first active time.

The terminal device monitors the first DCI in all the cells in the third cell group within the first active time. In other words, within the first active time, the terminal device does not monitor the retransmission scheduling information of the first data in a cell outside the third cell group, or considers that the retransmission scheduling information of the first data obtained through monitoring in a cell outside the third cell group is invalid.

705: If determining to send the first DCI within a second active time, the network device sends the first DCI in a fourth target cell in the fourth cell group.

The retransmission of the first data scheduled by using the first DCI may be understood as the retransmission scheduling information of the first data. The second active time is an intersection time period of a non-running time of the DRX-on duration timer, a non-running time of the DRX-inactivity timer, and a running time of a retransmission timer of a process of first data. Related content of the second active time is described in step 201. For details, refer to the foregoing descriptions. Details are not described herein again.

Each cell in the fourth cell group is a cell in the third cell group, and a quantity of cells included in the fourth cell group is less than a quantity of cells included in the third cell group. In other words, the fourth cell group is included in the third cell group. In this embodiment of this application, there are a plurality of possibilities for cells included in the fourth cell group. Descriptions are provided below.

In some optional implementations, the fourth cell group includes only one cell, and the cell is a cell in which scheduling information of the first data is initially transmitted or a cell in which scheduling information of the first data is transmitted most recently. In this case, the fourth cell group may be specified in an air interface protocol of a 3GPP. The most recent transmission of the scheduling information of the first data may be initial transmission of the scheduling information of the first data, or may be retransmission of the scheduling information of the first data. This is not specifically limited herein.

In this implementation, the fourth cell group includes only one cell. This means that the terminal device can obtain the retransmission scheduling information of the first data by monitoring only one scheduling cell, thereby greatly reducing a quantity of scheduling cells monitored by the terminal device, and greatly reducing power consumption of the terminal device. In addition, when the cell is a cell in which the scheduling information of the first data is transmitted most recently, the cell is in a monitored state most recently, thereby improving convenience of the technical solution.

In some optional implementations, the fourth cell group is a second preset cell group, and there is a mapping relationship between the second preset cell group and the third cell group, or there is a mapping relationship between the second preset cell group and a process number of the first data. In this implementation, the mapping relationship between the fourth cell group and the third cell group is specified by higher layer signaling, and then is notified to the terminal device by using the network device.

In conclusion, in this embodiment of this application, there are a plurality of possibilities for the fourth cell group, thereby enriching application scenarios of the technical solutions in this application.

706: The terminal device monitors the first DCI only in all cells in the fourth cell group within the second active time.

The terminal device monitors the first DCI only in all the cells in the fourth cell group within the second active time. In other words, the terminal device does not monitor the first DCI in a cell in the third cell group other than a cell in the fourth cell group, or considers that the retransmission scheduling information of the first data monitored by the terminal device in a cell outside the fourth cell group is invalid.

It should be noted that in a retransmission process of the first data, it is possible that only step 703 and step 704 are performed, or only step 705 and step 706 are performed. Specific execution depends on whether the network device determines to send the first DCI within the first active time or the second active time. Details are not described herein again.

In this embodiment of this application, the network device and the terminal device transmit the first DCI in different cells within different active times is specifically: Within the first active time, the network device sends the first DCI in the third target cell in the third cell group, and the terminal device monitors the first DCI in all cells in the third cell group; and within the second active time, the network device sends the first DCI in the fourth target cell in the fourth cell group, and the terminal device monitors the first DCI only in all cells in the fourth cell group. A quantity of cells in the fourth cell group is less than a quantity of cells in the third cell group, and each cell in the fourth cell group is a cell in the third cell group. Therefore, the terminal device does not need to monitor a cell outside the fourth cell group in the third cell group within the second active time, thereby reducing power consumption of the terminal device.

It may be understood that to implement the functions in the foregoing embodiments, the network device and the terminal device include corresponding hardware structures and/or software modules for performing the functions. A person skilled in the art should be easily aware that in combination with the units and the method steps in the examples described in embodiments disclosed in this application, this application can be implemented by using hardware or a combination of hardware and computer software. Whether a function is performed by hardware or hardware driven by computer software depends on specific application scenarios and design constraints of the technical solutions.

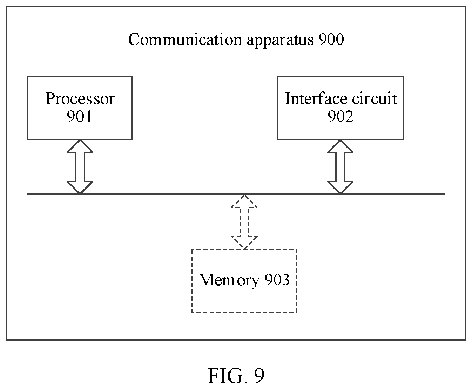

FIG. 8 and FIG. 9 are diagrams of structures of possible communication apparatuses according to embodiments of this application. The communication apparatus may be configured to implement functions of the network device or the terminal device in the foregoing method embodiments, and therefore can also achieve the beneficial effect of the foregoing method embodiments. In this embodiment of this application, the communication apparatus may be the terminal 120 shown in FIG. 1, or may be the base station 110 shown in FIG. 1, or may be a module (for example, a chip) used in the terminal or the base station.

As shown in FIG. 8, a communication apparatus 800 includes a processing unit 802 and a transceiver unit 801. The communication apparatus 800 is configured to implement functions of the terminal device or the network device in the method embodiment shown in FIG. 2, FIG. 6, or FIG. 7.

When the communication apparatus 800 is configured to implement the functions of the terminal device in the method embodiment shown in FIG. 2, the transceiver unit 801 is configured to: if first DCI is received within a first active time, receive first data in a first target cell. In this case, the first DCI indicates to retransmit the first data in the first target cell.

The transceiver unit 801 is further configured to: if the first DCI is received within a second active time, receive the first data in a second target cell. In this case, the first DCI indicates to retransmit the first data in the second target cell.

When the communication apparatus 800 is configured to implement the functions of the terminal device in the method embodiment shown in FIG. 6, the transceiver unit 801 is configured to: if first DCI is received within a first active time, send first data in a first target cell. In this case, the first DCI indicates to retransmit the first data in the first target cell. The transceiver unit 801 is further configured to: if the first DCI is received within a second active time, send the first data in a second target cell. In this case, the first DCI indicates to retransmit the first data in the second target cell.

When the communication apparatus 800 is configured to implement the functions of the network device in the method embodiment shown in FIG. 2 or FIG. 6, the processing unit 802 is configured to determine to send the first DCI within the first active time or the second active time. The transceiver unit 801 is configured to send the first DCI, where the first DCI indicates to retransmit the first data. If the first DCI is sent within the first active time, the first DCI indicates to retransmit the first data in the first target cell; or if the first DCI is sent within the second active time, the first DCI indicates to retransmit the first data in the second target cell.

In the embodiment shown in FIG. 2 or FIG. 6, the first target cell is any cell in the first cell group, the first cell group includes M cells, and M is an integer greater than or equal to 2. The second target cell is any cell in the second cell group, each cell in the second cell group is a cell in the first cell group, and a quantity of cells included in the second cell group is less than M. The first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of the first data.

When the communication apparatus 800 is configured to implement the functions of the terminal device in the method embodiment shown in FIG. 7, the processing unit 802 is configured to monitor the first DCI in all cells in a third cell group within the first active time. The processing unit 802 is further configured to: monitor the first DCI in all cells in a fourth cell group within the second active time, and skip monitoring the first DCI in a cell in the third cell group other than a cell in the fourth cell group.

When the communication apparatus 800 is configured to implement the functions of the network device in the method embodiment shown in FIG. 7, the processing unit 802 is configured to determine to send the first DCI to the terminal device within the first active time or the second active time. The transceiver unit 801 is configured to: if it is determined to send the first DCI within the first active time, send the first DCI in a third target cell in the third cell group. The transceiver unit 801 is further configured to if it is determined to send the first DCI within the second active time, send the first DCI in a fourth target cell in the fourth cell group.

In the embodiment shown in FIG. 7, the third cell group includes N cells, and N is an integer greater than or equal to 2. Each cell in the fourth cell group is a cell in the third cell group, and a quantity of cells included in the fourth cell group is less than N. The first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of the first data.

For more detailed descriptions of the processing unit 802 and the transceiver unit 801, refer to the related descriptions of the method embodiment shown in FIG. 2, FIG. 6, or FIG. 7.

As shown in FIG. 9, a communication apparatus 900 includes a processor 901 and an interface circuit 902. The processor 901 and the interface circuit 902 are coupled to each other. It may be understood that the interface circuit 902 may be a transceiver or an input/output interface. Optionally, the communication apparatus 900 may further include a memory 903, configured to store instructions executed by the processor 901, or store input data required by the processor 901 to run instructions, or store data generated after the processor 901 runs instructions.

When the communication apparatus 900 is configured to implement the method shown in FIG. 2, FIG. 6, or FIG. 7, the processor 901 is configured to implement a function of the processing unit 802, and the interface circuit 902 is configured to implement a function of the transceiver unit 801.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein may be RAN nodes or terminals, or may be modules in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. An example storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. Alternatively, the processor and the storage medium may exist in a base station or terminal as discrete components.

All or some of the foregoing embodiments may be implemented by software, hardware, firmware, or any combination thereof. When implemented by using software, all or some of the embodiments may be implemented in a form of a computer program product. The computer program product includes one or more computer programs or instructions. When the computer programs or instructions are loaded and executed on a computer, all or some of the procedures or functions described in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium that can be accessed by the computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

In the specification, claims, and accompanying drawings of this application, the terms "first", "second", and so on are intended to distinguish between similar objects but do not necessarily indicate a particular order or sequence. It should be understood that the terms used in such a way are interchangeable in proper circumstances. This is merely a discrimination manner that is used when objects having a same attribute are described in embodiments of this application. In addition, the terms "include" and "have" and any other variants thereof are intended to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

**Claims**

1. A data transmission method, wherein the method is applied to a terminal device, and the method comprises:

   if first downlink control information DCI is received within a first active time, and the first DCI indicates to retransmit first data in a first target cell, receiving the first data in the first target cell, wherein the first target cell is any cell in a first cell group, the first cell group comprises M cells, and M is an integer greater than or equal to 2; or
   if the first DCI is received within a second active time, and the first DCI indicates to retransmit the first data in a second target cell, receiving the first data in the second target cell, wherein the second target cell is any cell in a second cell group, each cell in the second cell group is a cell in the first cell group, and a quantity of cells comprised in the second cell group is less than M, wherein
   the first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of the first data.

2. A data transmission method, wherein the method is applied to a network device, and the method comprises:

   determining to send first downlink control information DCI within a first active time or a second active time; and
   sending the first DCI, wherein the first DCI indicates to retransmit first data; and if the first DCI is sent within the first active time, the first DCI indicates to retransmit the first data in a first target cell; or if the first DCI is sent within the second active time, the first DCI indicates to retransmit the first data in a second target cell, wherein
   the first target cell is any cell in a first cell group, the first cell group comprises M cells, and M is an integer greater than or equal to 2; and the second target cell is any cell in a second cell group, each cell in the second cell group is a cell in the first cell group, and a quantity of cells comprised in the second cell group is less than M; and
   the first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of the first data.

3. The method according to claim 1 or 2, wherein the second cell group comprises only one cell, and the cell is a cell in which the first data is initially transmitted or a cell in which the first data is transmitted most recently.

4. The method according to claim 1 or 2, wherein the second cell group is all cells that are in the first cell group and that correspond to a same scheduling cell as an initial transmission cell, and the initial transmission cell is a cell in which the first data is initially transmitted; or
   the second cell group is all cells that are in the first cell group and that correspond to a same scheduling cell as a historical cell, and the historical cell is a cell in which the first data is transmitted most recently.

5. The method according to claim 1 or 2, wherein the second cell group is a first preset cell group, and there is a mapping relationship between the first preset cell group and the first cell group, or there is a mapping relationship between the first preset cell group and a process number of the first data.

6. The method according to claim 1 or 2, wherein if the first cell group comprises a self-scheduling cell, the second cell group comprises only the self-scheduling cell.

7. The method according to any one of claims 1 to 6, wherein the running time is a time in which a timer is not reduced to 0 after being started, and the non-running time is a time in which the timer is not started, is stopped, or is reduced to 0 after being started.

8. A data transmission method, wherein the method is applied to a terminal device, and the method comprises:

   monitoring first downlink control information DCI in all cells in a third cell group within a first active time, wherein the third cell group comprises N cells, and N is an integer greater than or equal to 2; and

within a second active time, monitoring the first DCI in all cells in a fourth cell group, and skipping monitoring the first DCI in a cell in the third cell group other than a cell in the fourth cell group, wherein each cell in the fourth cell group is a cell in the third cell group, and a quantity of cells comprised in the fourth cell group is less than N, wherein the first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of first data.

9. A data transmission method, wherein the method is applied to a network device, and the method comprises:

determining to send first downlink control information DCI to a terminal device within a first active time or a second active time; and

sending the first DCI, wherein the first DCI indicates to retransmit first data; and if it is determined to send the first DCI within the first active time, sending the first DCI in a third target cell in a third cell group, wherein the third cell group comprises N cells, and N is an integer greater than or equal to 2; or

if it is determined to send the first DCI within the second active time, sending the first DCI in a fourth target cell in a fourth cell group, wherein each cell in the fourth cell group is a cell in the third cell group, and a quantity of cells comprised in the fourth cell group is less than N, wherein

the first active time is a running time of a discontinuous reception-on duration timer or a running time of a discontinuous reception-inactivity timer, and the second active time is an intersection time period of a non-running time of the discontinuous reception-on duration timer, a non-running time of the discontinuous reception-inactivity timer, and a running time of a retransmission timer of a process of the first data.

10. The method according to claim 8 or 9, wherein the fourth cell group comprises only one cell, and the cell is a cell in which scheduling information of the first data is initially transmitted or a cell in which scheduling information of the first data is transmitted most recently.

11. The method according to claim 8 or 9, wherein the fourth cell group is a second preset cell group, and there is a mapping relationship between the second preset cell group and the third cell group, or there is a mapping relationship between the second preset cell group and a process number of the first data.

12. The method according to any one of claims 8 to 11, wherein the running time is a time in which a timer is not reduced to 0 after being started, and the non-running time is a time in which the timer is not started, is stopped, or is reduced to 0 after being started.

13. A communication apparatus, comprising a module configured to perform the method according to any one of claims 1 to 12.

14. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 12 by using a logic circuit or executing code instructions.

15. A computer-readable storage medium, wherein the storage medium stores a computer program or instructions, and when the computer program or instructions are executed by a communication apparatus, the communication apparatus is enabled to perform the method according to any one of claims 1 to 12.

16. A computer program product, wherein the computer program product comprises a computer program or instructions, and when the computer program or instructions are executed by a communication apparatus, the communication apparatus is enabled to perform the method according to any one of claims 1 to 12.

FIG. 1

EP 4 765 708 A1

FIG. 2

**(a)**

PDSCH in downlink initial transmission

PUCCH in downlink initial transmission (NACK)

PDCCH in downlink retransmission

PDSCH in downlink retransmission

PUCCH in downlink retransmission (ACK)

PDCCH in downlink initial transmission

tA

tB

t1

t3

t2

T

**(b)**

PDCCH in uplink initial transmission

PUSCH in uplink initial transmission

PDCCH in uplink retransmission

PUSCH in uplink retransmission

tA

tB

tC

t1

t3

t4

t2

T

FIG. 3

**(a)**

Scheduling cell — Scheduled cell 1 ⋮ Scheduled cell N — **Scheduled cell group**

**(b)**

Scheduling cell 1 — Scheduled cell 1 ⋮ Scheduling cell N — Scheduled cell N — **Scheduled cell group**

**(c)**

Scheduling cell 1 — Scheduled cell 1 ⋮ Scheduling cell K — Scheduled cell N — **Scheduled cell group**

**(d)**

Scheduling cell 1 — Scheduled cell 1.1 ⋮ Scheduled cell 1.X

Scheduling cell 2 — Scheduled cell 2.1 ⋮ Scheduled cell 2.Y — **Scheduled cell group**

⋮

Scheduling cell K — Scheduled cell K

FIG. 4

**(a)**

Retransmission in the same cell

Cell 1:

| D | D | D | U | **PUSCH** | D | D | D | **PUSCH** | U |

Cross-cell retransmission

Cell 2:

| U | U | U | D | D | U | **PUSCH** | U | D | D |

| ← Slot 0 → | ← Slot 1 → | ← Slot 2 → | ← Slot 3 → | ← Slot 4 → | ← Slot 5 → | ← Slot 6 → | ← Slot 7 → | ← Slot 8 → | ← Slot 9 → |

**(b)**

Retransmission in the same cell

Cell 1:

| **PDSCH** | D | D | U | U | **PDSCH** | D | D | U | U |

Cross-cell retransmission

Cell 2:

| D | D | **PDSCH** | U | U | D | D | D | U | U |

| ← Slot 0 → | ← Slot 1 → | ← Slot 2 → | ← Slot 3 → | ← Slot 4 → | ← Slot 5 → | ← Slot 6 → | ← Slot 7 → | ← Slot 8 → | ← Slot 9 → |

FIG. 5

FIG. 6

```
┌──────────────┐                              ┌──────────────┐
│   Network    │                              │   Terminal   │
│   device     │                              │   device     │
└──────┬───────┘                              └──────┬───────┘
       │         701: DRX parameter                  │
       │───────────────────────────────────────────>│
       │                                             │
       │  702: Configuration information of a third  │
       │              cell group                     │
       │───────────────────────────────────────────>│
       │                                             │
       │  703: If determining to send first DCI      │
       │  within a first active time, send the       │
       │  first DCI in a third target cell in        │
       │          a third cell group                 │
       │───────────────────────────────────────────>│
```

704: Monitor the first DCI in all cells in the third cell group within the first active time

705: If determining to send the first DCI within a second active time, send the first DCI in a fourth target cell in a fourth cell group

706: Monitor the first DCI only in all cells in the fourth cell group within the second active time

FIG. 7

```
┌─────────────────────────────┐
│    Communication            │
│    apparatus 800            │
│  ┌───────────────────────┐  │
│  │  Transceiver unit     │  │
│  │       801             │  │
│  └───────────┬───────────┘  │
│              │              │
│  ┌───────────┴───────────┐  │
│  │  Processing unit      │  │
│  │       802             │  │
│  └───────────────────────┘  │
└─────────────────────────────┘
```

FIG. 8

Communication apparatus 900

Processor
901

Interface circuit
902

Memory 903

FIG. 9

## INTERNATIONAL SEARCH REPORT

| International application No. |
|---|
| **PCT/CN2024/115706** |

| A. | CLASSIFICATION OF SUBJECT MATTER |
|---|---|

H04L 5/00(2006.01)i; H04W72/02(2009.01)i

According to International Patent Classification (IPC) or to both national classification and IPC

| B. | FIELDS SEARCHED |
|---|---|

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNABS: CNTXT; VEN; CNKI; USTXT; WOTXT; EPTXT; 3GPP: 华为, 激活时间, 指示, 小区, 组, 不同, 第一, 第二, 重传, 监测定时器, 监听定时器, 重传定时器, 去激活定时器, 非激活定时器, 不激活定时器, HUAWEI, interval, DCI, indication, cell, group, different, first, second, ondurationtimer, inactivitytimer, retransmissiontimer, DRX

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2023051363 A1 (FG INNOVATION CO., LTD.) 06 April 2023 (2023-04-06) description, paragraphs [0006]-[0287], and figures 1-11 | 1-16 |
| A | CN 107155212 A (ZTE CORP.) 12 September 2017 (2017-09-12) entire document | 1-16 |
| A | CN 113163413 A (HUAWEI TECHNOLOGIES CO., LTD.) 23 July 2021 (2021-07-23) entire document | 1-16 |
| A | US 2014086110 A1 (LG ELECTRONICS INC.) 27 March 2014 (2014-03-27) entire document | 1-16 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 October 2024** | **28 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/115706** |

| Patent document cited in search report | | | Publication date (day/month/year) | Patent family member(s) | | | Publication date (day/month/year) |
| --- | --- | --- | --- | --- | --- | --- | --- |
| WO | 2023051363 | A1 | 06 April 2023 | None | | | |
| CN | 107155212 | A | 12 September 2017 | WO | 2017148214 | A1 | 08 September 2017 |
| CN | 113163413 | A | 23 July 2021 | None | | | |
| US | 2014086110 | A1 | 27 March 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311160443